# EUROPÄISCHE PATENTANMELDUNG

(11) **EP 1 364 754 A2**
(43) Veröffentlichungstag der Anmeldung: **26.11.2003**
(21) Anmeldenummer: 03011244.5
(22) Anmeldetag: 16.05.2003
(51) Int. Cl.: B25H 3/04, B25J 15/04, B23Q 3/155

(54) **Werkzeuglagerungsvorrichtung, Werzeugwechselvorrichtung und Lagerungseinheit**

(30) Priorität: 23.05.2002 DE 20208059 U
(71) Anmelder: Staeubli Tec-Systems GmbH, 95448 Bayreuth (DE)
(72) Erfinder: Böhm, Georg, 91281 Kirchenthumbach (DE)
(74) Vertreter: Grünecker, Kinkeldey, Stockmair & Schwanhäusser Anwaltssozietät

(57) **Zusammenfassung**

Die vorliegende Erfindung betrifft eine Werkzeuglagerungsvorrichtung, insbesondere für Werkzeuge von Robotern oder Manipulatoren, mit einer an einem Werkzeug angeordneten ersten Kopplungseinrichtung (2) und einer im Bereich eines Werkzeugmagazins angeordneten zweiten Kopplungseinrichtung (3), wobei die werkzeugseitigen und die magazinseitigen Kopplungseinrichtungen (2,3) in einer vorgegebenen relativen Lage zueinander axial verbindbar sind, und wobei die werkzeugseitige Kopplungseinrichtung (2) an der magazinseitigen Kopplungseinrichtung (3) einseitig lagerbar ist, sowie eine damit gebildete Magazineinrichtung und eine entsprechende Lagerungseinheit.

## Beschreibung

Die Erfindung betrifft eine Werkzeuglagerungsvorrichtung und eine Werkzeugwechselvorrichtung insbesondere für Werkzeuge von Robotern oder Manipulatoren.

Ferner betrifft die Erfindung eine Lagerungseinheit, die insbesondere auch in einer Werkzeuglagerungsvorrichtung oder einer Werkzeugwechselvorrichtung für Werkzeuge von Robotern oder Manipulatoren verwendbar ist.

Automatisierbare, maschinelle Bearbeitungs- und/oder Handhabungsprozesse treten in der industriellen Praxis in vielfältiger Art und Weise auf. Beispielsweise an Fertigungsstraßen im Automobilbau, wie Schweißstraßen und Montagebändern, werden automatisierbare Bearbeitungs- und/oder Handhabungsprozesse in der Regel von Robotern, sogenannten Industrierobotern, ausgeführt. Häufig besteht die Notwendigkeit derartiger Industrieroboter mit verschiedenartigen Werkzeugen wie Schweißzangen, Klebepistolen, Nietzangen oder Haltemitteln (beispielsweise Saugnäpfe oder Klemmen) entsprechend zu entsprechenden unterschiedlichen Aufgaben auszurüsten.

In der Praxis ergibt sich dabei auch die Anforderung einen derartigen Werkzeugwechsel auch während des Einsatzes eines Industrieroboters, also während der Produktion durchzuführen, beispielsweise ist ein mit einer Schweißzange ausgerüsteter Industrieroboter für einen nachfolgenden Montageschritt mit einer Nietzange zu bestücken.

Grundsätzlich gilt dabei, daß bei Durchführung eines Werkzeugwechsels ein vorhandenes Werkzeug abzulegen und ein weiteres Werkzeug anstelle diesem am Industrieroboter anzuordnen ist. Zur Durchführung des Werkzeugwechsels ist es daher notwendig, ein unter Umständen schweres und großvolumiges (genutztes) Werkzeug beschädigungsfrei an eine vorbestimmte Stelle in einem Magazin (dem sogenannten Werkzeugbahnhof) abzulegen und danach aus diesem Werkzeugbahnhof ein zu benutzendes Werkzeug auszuwählen und aufzunehmen.

Zur Durchführung des Werkzeugwechsels ist es bekannt, die Verbindung zwischen Roboter/ Manipulator und Werkzeug mit einem Kupplungssystem auszurüsten, welche wenigstens zwei Kupplungshälften aufweisen, die über eine Trennebene lösbar miteinander verbindbar sind und von denen eine Kupplungshälfte mit dem (bewegbaren) Industrieroboter/Manipulator und die andere Kupplungshälfte mit dem jeweiligen (zu bewegenden) Werkzeug verbunden sind. Da der Industrieroboter/ Manipulator eine der Kupplungshälften trägt, kann er jeweils mit verschiedenen Werkzeugen verbunden werden, welche mit einer entsprechenden komplementären Kupplungshälfte versehen sind.

Bekannte Werkzeuglagerungsvorrichtungen derartiger Werkzeugwechselvorrichtungen weisen eine dreibeinige Gestellstruktur auf, in die ein (abzulegendes) Werkzeug abgelegt wird. Zur Bildung eines Werkzeugbahnhofes (Magazins) sind mehrere solche Dreibein-Lagerungen nebeneinander angeordnet. Zur Aufnahme eines aufzunehmenden Werkzeuges wird der Industrieroboter mit seiner Kupplungshälfte entsprechend zu einer weiteren Dreibein-Lagerung verfahren.

Nachteilig an derartigen Werkzeuglagerungsvorrichtungen ist der hohe Platzbedarf der Dreibein-Lagerungen. Dementsprechend weisen auch die mit diesen Dreibein-Lagerungen gebildeten Werkzeugbahnhöfe (Magazine) einen hohen Platzbedarf auf. Aufgrund dieses Platzbedarfs der Magazine ergibt sich u. a. auch einer Begrenzung der Anzahl an in einem derartigen Magazin bevorrateten Werkzeuge. Entsprechend ist auch die Auswahl an unterschiedlichen Bearbeitungsprozessen eines mit einem derartigen Magazin ausgerüsteten Industrieroboters begrenzt.

Der Erfindung liegt daher die Aufgabe zugrunde, eine Werkzeuglagerungsvorrichtung zu schaffen, die bei einfacher konstruktiver Gestaltung einen geringen Platzbedarf aufweist.

Diese Aufgabe wird erfindungsgemäß gelöst durch eine Werkzeuglagerungsvorrichtung, insbesondere für Werkzeuge von Robotern oder Manipulatoren, mit einer an einem Werkzeug angeordneten ersten Kopplungseinrichtung und einer im Bereich eines Werkzeugmagazins angeordneten zweiten Kopplungseinrichtung, wobei die werkzeugseitige und die magazinseitige Kopplungseinrichtung in einer vorgegebenen relativen Lage zueinander axial verbindbar sind, und wobei die werkzeugseitige Kopplungseinrichtung an der magazinseitigen Kopplungseinrichtung einseitig lagerbar ist.

Indem eine Kopplungseinrichtung am Werkzeug vorgesehen wird, welche mit einer weiteren Kopplungseinrichtung im Bereich des Werkzeugmagazins in einer ausgezeichneten Lage koppelbar ist, und indem die Lagerung des Werkzeuges bei erfolgter Koppelung einseitig erfolgt, ist der Platzbedarf dieser Werkzeuglagerungsvorrichtung minimiert. Zudem ergibt sich über diese "zweiteilige" Ausführung der Werkzeuglagerungsvorrichtung ein konstruktiv einfacher und kostentechnisch günstiger Aufbau.

Gemäß einem vorteilhaften Ausführungsbeispiel weist die werkzeugseitige Kopplungseinrichtung eine Grundplatte auf, wobei an einem Ende der Grundplatte eine Ausnehmung zur Lagerung des Werkzeuges und einen Lochkranz zum Verbinden mit dem Werkzeug ausgebildet und die Grundplatte an einem gegenüberliegenden Ende mit einer Aufsteckhülse verbunden ist.

Folglich können eine Vielzahl an unterschiedlichen Werkzeugen an der werkzeugseitigen Kopplungseinrichtung angeordnet werden, ohne daß die vorliegende Werkzeuglagerungsvorrichtung (insbesondere das Kupplungsprinzip) an die einzelnen abzulegenden Werkzeuge angepaßt werden müßten. Dies führt zu einer großen Variabilität der vorliegenden Vorrichtung und zu erheblichen Kostenreduzierungen gegenüber bekannten Systemen.

Die magazinseitige Kopplungseinrichtung weist vorteilhafterweise einen Kupplungszapfen auf, wobei der Kupplungszapfen gemeinsam mit der Aufsteckhülse der werkzeugseitigen Kopplungseinrichtung zum Verbinden der magazinseitigen und werkzeugseitigen Kopplungseinrichtungen vorgesehen ist.

Vorteilhafterweise weist die Werkzeuglagerungsvorrichtung zumindest eine achsparallele Führungsnut und zumindest ein Führungsmittel auf, wobei die Führungsnut an einer Innenumfangsfläche der Aufsteckhülse und das Führungsmittel am Kupplungszapfen angeordnet sind und das Führungsmittel in der Führungsnut zur Vorgabe der relativen Lage zwischen magazinseitiger und werkzeugseitiger Kopplungseinrichtung zumindest teilweise aufnehmbar ist.

Über diese Anordnung wird auf einfache und effektive Weise die relative Lage zwischen den werkzeugseitigen und magazinseitigen Kopplungseinrichtungen festgelegt. Dementsprechend werden die Werkzeuge in der Werkzeuglagerungsvorrichtung grundsätzlich in einer gewünschten Position abgelegt.

Dabei können an der Innenumfangsfläche der Aufsteckhülse jeweils drei achsparallele Führungsnuten gleichmäßig verteilt entlang der Innenumfangsfläche in zwei parallelen Ebenen angeordnet sein.

Zudem kann der Kupplungszapfen der magazinseitigen Kopplungseinrichtung einen rotationssymmetrischen Grundkörper aufweisen, wobei mehrere Führungsmittel am Kupplungszapfen gelagert sind, die zur Führung der Aufsteckhülse der werkzeugseitigen Kopplungseinrichtung bei Kopplung mit der magazinseitigen Kopplungseinrichtung vorgesehen sind.

Die Führungsmittel können kugelscheibenförmig ausgebildet, drehbar am Kupplungszapfen gelagert und zumindest teilweise in im Kupplungszapfen ausgebildeten Ausnehmungen angeordnet sein.

An einer Stirnseite des Kupplungszapfens und/oder an einer Außenumfangsfläche des Kupplungszapfens können jeweils drei Führungsmittel gleichverteilt in zwei zueinander parallelen Ebenen angeordnet sein. Die an der Stirnseite des Kupplungszapfens angeordneten Führungsmittel können entlang des Umfangs versetzt zu den an der Außenumfangsfläche des Kupplungszapfens angeordneten Führungsmittel gelagert sein.

Gemäß einem weiteren bevorzugten Ausführungsbeispiel ist die magazinseitige Kopplungseinrichtung in zumindest drei Lagerungseinheiten in einer magazinseitigen Aufnahme gelagert, wobei die magazinseitige Kopplungseinrichtung in einer Ebene bewegbar ist, die parallel zu der durch die zumindest drei Lagerungseinheiten aufgespannten Ebene angeordnet ist.

Folglich ist gemäß diesem Ausführungsbeispiel die magazinseitige Kopplungseinrichtung an drei Punkten stabil gelagert. Folglich können sowohl Zug- und Druckkräfte als auch Momente effektiv in dieser stabilen Lagerung aufgenommen werden. Zudem ergibt sich über die Bewegbarkeit der magazinseitigen Kopplungseinrichtung eine Ausgleichsmöglichkeit für einen relativen Versatz zwischen Aufsteckhülse und Kupplungszapfen insbesondere bei Positionierungsfehler bei Ablage des Werkzeugs. Dementsprechend sind Fehler in der Steuerung eines Industrieroboters, welche bei bekannten Vorrichtungen zu Stößen, Verkanten und ggf. Beschädigung der Lagerungsvorrichtungen führen könnten in diesem Ausführungsbeispiel auf einfache Art und Weise ausgleichbar.

Die magazinseitige Kopplungseinrichtung kann eine Basisplatte aufweisen, die in genau drei Lagerungseinheiten magazinseitig gelagert ist, wobei jede der Lagerungseinheiten eine bestimmte Bewegung der Basisplatte gegenüber der magazinseitigen Aufnahme ermöglicht und wobei die drei Lagerungseinheiten an der Basisplatte dreiecksförmig angeordnet sind.

Folglich können sowohl Zug- und Druckkräfte als auch Momente effektiv in dieser eindeutig bestimmten Lagerung aufgenommen werden.

Bevorzugterweise weisen die Lagerungseinheiten jeweils eine innere Hülse, eine äußere Hülse und zumindest ein zwischen innerer und äußerer Hülse angeordnetes Ausgleichsmittel auf, wobei die innere Hülse mit der magazinseitigen Aufnahme und die äußere Hülse mit der Basisplatte verbunden sind. Dabei können die inneren und äußeren Hülsen der Lagerungseinheiten mit der magazinseitigen Aufnahme bzw. der Basisplatte jeweils über zumindest einen Haltebolzen verbunden sein. Insbesondere können die inneren Hülsen jeweils über einen, achsparallel zur Mittelachse der inneren Hülse angeordneten inneren Haltebolzen und/oder die äußeren Hülsen jeweils über vier symmetrisch angeordnete äußere Haltebolzen gehalten sein.

Die Lagerungseinheiten können ein erstes Ausgleichsmittel aufweisen, wobei das erste Ausgleichsmittel mehrere Wälzkörper, insbesondere Kugeln, und zumindest ein elastisch verformbares und insbesondere ringförmiges Rückstellelement aufweist, wobei die Wälzkörper in Ausnehmungen des Rückstellelementes angeordnet sind und wobei das erste Ausgleichsmittel zwischen innerer und äußerer Hülse angeordnet ist. Die Lagerungseinheiten können weiterhin ein zweites Ausgleichsmittel aufweisen, wobei das zweite Ausgleichsmittel mehrere Wälzkörper, insbesondere Kugeln, und zumindest ein elastisch verformbares und insbesondere ringförmiges Rückstellelement aufweist, wobei die Wälzkörper in Ausnehmungen des Rückstellelementes angeordnet sind und wobei das zweite Ausgleichsmittel zwischen innerer Hülse und Basisplatte angeordnet ist.

Weiterhin ist es Aufgabe der vorliegenden Erfindung, eine Werkzeugwechselvorrichtung zu schaffen, bei der eine Vielzahl an Werkzeugen bei niedrigem Kostenaufwand lagerbar ist.

Diese Aufgabe wird erfindungsgemäß durch eine Werkzeugwechselvorrichtung, insbesondere für Werkzeuge von Robotern oder Manipulatoren mit den Eigenschaften des Patentanspruches 10 gelöst.

Die erfindungsgemäßen Werkzeuglagerungsvorrichtungen ermöglichen die Anordnung einer Vielzahl an zweiten Kopplungseinrichtungen im Bereich eines Werkzeugmagazins bei niedrigem Platzbedarf, insbesondere da ein Teil der Werkzeuglagerungsvorrichtungen (die ersten Kupplungseinrichtungen) am Werkzeug vorgesehen sind und da auf einen aufwendigen und voluminösen Aufbau (beim Stand der Technik: Dreibeinanordnung) verzichtet werden kann. Zudem entfällt die Notwendigkeit die einzelnen zweiten Kopplungseinrichtungen an die einzelnen Werkzeuge anzupassen, wodurch der Kostenautwand erheblich reduziert ist.

Zudem ist es Aufgabe der vorliegenden Erfindung eine Lagerungseinheit zur beweglichen Lagerung eines ersten Bauteiles an einem zweiten Bauteil anzugeben, bei der eine axiale Verschieblichkeit des ersten gegenüber dem zweiten Bauteil bei gleichzeitiger Induzierung einer Rückstellkraft ermöglicht ist.

Diese weitere Aufgabe wird erfindungsgemäß durch eine Lagerungseinheit zur beweglichen Lagerung eines ersten Bauteiles an einem zweiten Bauteil mit einer inneren Hülse, die mit dem zweiten Bauteil verbunden ist, einer äußeren Hülse, die mit dem ersten Bauteil verbunden ist, und zumindest einem Ausgleichsmittel, wobei das Ausgleichsmittel mehrere Wälzkörper, insbesondere Kugeln, und zumindest ein elastisch verformbares und insbesondere ringförmiges Rückstellelement aufweist, wobei die Wälzkörper das erste Bauteil gegen das zweite Bauteil und das Rückstellelement die Wälzkörper gegen die innere Hülse und/oder die äußere Hülse abstützen.

Wird eines der ersten oder zweiten Bauteile gegenüber dem entsprechend anderen Bauteil verschoben, so wird entsprechend zu dieser Verschiebung die innere Hülse gegenüber der äußeren Hülse verschoben. Über diese relative Verschiebung der inneren und äußeren Hülsen werden die Wälzkörper (Kugeln) in die elastisch verformbare Rückstellelemente gedrückt. Werkstoff der Rückstellelemente wird in die umgebenden Bereiche verlagert, wodurch die Verschieblichkeit der ersten und zweiten Bauteile gegeneinander gewährleistet ist. Durch die elastische Verformbarkeit der Rückstellelemente ergibt sich zudem eine Rückstellkraft, die in Richtung der ursprünglichen relativen Lage der ersten und zweiten Bauteile zueinander wirkt.

Vorteilhafterweise sind die inneren und äußeren Hülsen mit dem ersten bzw. dem zweiten Bauteil jeweils über zumindest einen Haltebolzen verbunden, wobei die inneren Hülsen jeweils insbesondere über einen, achsparallel zur Mittelachse der inneren Hülsen angeordneten inneren Haltebolzen und/oder die äußeren Hülsen jeweils über insbesondere vier symmetrisch angeordnete äußere Haltebolzen gehalten sind.

Die Lagerungseinheit kann ein erstes und/oder ein zweites Ausgleichmittel aufweisen, wobei das erste Ausgleichsmittel mehrere Wälzkörpem, insbesondere Kugeln, und zumindest ein elastisch verformbares und insbesondere ringförmiges Rückstellelement aufweist, wobei die Wälzkörpern in Ausnehmungen des Rückstellelementes angeordnet sind, und wobei das erste Ausgleichsmittel zwischen innerer und äußerer Hülse angeordnet ist, und wobei das zweite Ausgleichsmittel mehrere Wälzkörpem, insbesondere Kugeln, und zumindest ein elastisch verformbares und insbesondere ringförmiges Rückstellelement aufweist, wobei die Wälzkörpern in Ausnehmungen des Rückstellelementes angeordnet sind, und wobei das zweite Ausgleichsmittel zwischen innerer Hülse und erstem Bauteil angeordnet ist.

Die Rückstellelemente der Lagerungseinheit können aus einem elastisch verformbaren Werkstoff, insbesondere Hartgummi, ausgebildet sein.

Die Erfindung wird nachstehend anhand von bevorzugten Ausführungsbeispielen in Verbindung mit den zugehörigen Zeichnungen näher erläutert. In diesen zeigen:
- Fig. 1: eine perspektivische Darstellung eines Ausführungsbeispieles der Werkzeuglagerungsvorrichtung mit einer werkzeugseitigen ersten Kopplungseinrichtung und einer magazinseitigen zweiten Kopplungseinrichtung,
- Fig. 2: eine weitere "magazinseitige" perspektivische Darstellung des Ausführungsbeispieles der Werkzeuglagerungsvorrichtung nach Fig. 1,
- Fig. 3: eine Seitenansicht des Ausführungsbeispieles der Werkzeuglagerungsvorrichtung nach Fig. 1,
- Fig. 4: eine weitere Seitenansicht des Ausführungsbeispieles der Werkzeuglagerungsvorrichtung nach Fig. 1, die gegenüber Fig. 3 um 90° versetzt ist,
- Fig. 5: eine perspektivische Darstellung der magazinseitigen Kopplungseinrichtung mit drei Lagerungseinheiten und einem Kupplungszapfen,
- Fig. 6: eine weitere perspektivische Darstellung der magazinseitigen Kopplungseinrichtung nach Fig. 5,
- Fig. 7: eine Seitenansicht der magazinseitigen Kopplungseinrichtung nach Fig. 5,
- Fig. 8: eine weitere Seitenansicht der magazinseitigen Kopplungseinrichtung nach Fig. 5,
- Fig. 9: eine Draufsicht der magazinseitigen Kopplungseinrichtung nach Fig. 5,
- Fig. 10: eine Schnittdarstellung eines Ausführungsbeispieles der Lagerungseinheit zur Lagerung der magazinseitigen Kopplungseinrichtung,
- Fig. 11: eine Seitenansicht eines Ausführungsbeispieles der werkzeugseitigen Kopplungseinrichtung,
- Fig. 12: eine weitere Seitenansicht der werkzeugseitigen Kopplungseinrichtung nach Fig. 11,
- Fig. 13: eine perspektivische Darstellung der werkzeugseitigen Kopplungseinrichtung nach Fig. 11,
- Fig. 14: eine weitere perspektivische Darstellung der werkzeugseitigen Kopplungseinrichtung nach Fig. 11 und
- Fig. 15: eine Draufsicht auf die Werkzeuglagerungsvorrichtung nach Fig. 1 im gekoppelten Zustand.
- Fig. 16: eine perspektivische, schematische Darstellung eines Werkzeugbahnhofs mit drei Werkzeuglagerungsvorrichtungen und einem Werkzeug.

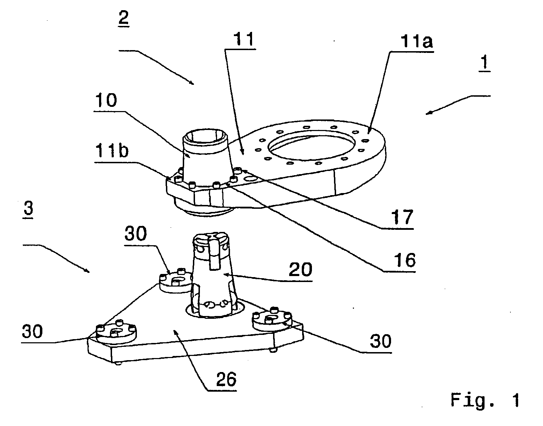

In Fig. 1 bis 4 ist ein Ausführungsbeispiel der Werkzeuglagerungsvorrichtung 1 mit einer ersten Kopplungseinrichtung 2 und einer zweiten Kopplungseinrichtung 3 gezeigt, wobei die erste Kopplungseinrichtung 2 mit einem Werkzeug insbesondere eines Industrieroboters verbindbar ist, und wobei die zweite Kopplungseinrichtung 3 im Bereich eines Werkzeugmagazins angeordnet ist.

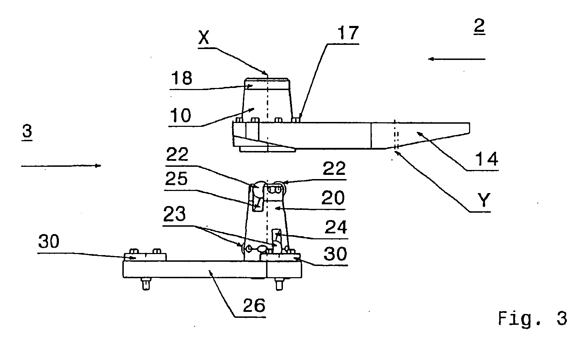

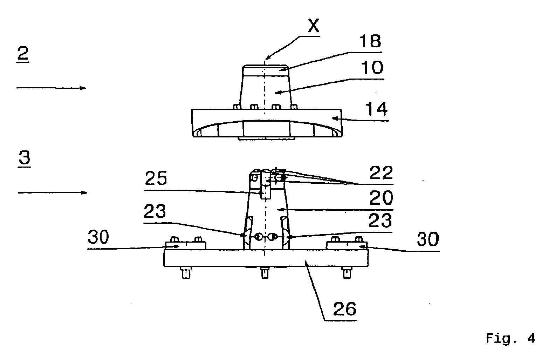

Das in den Fig. 1 bis 4 gezeigte Ausführungsbeispiel ist in einem Zustand unmittelbar vor Kopplung der Kopplungseinrichtungen 2,3 bzw. unmittelbar nach Entkopplung (Trennen) der Kopplungseinrichtungen 2,3 dargestellt, wobei ein Teilbereich der ersten werkzeugseitigen Kopplungseinrichtung 2 über der zweiten magazinseitigen Kopplungseinrichtung 3 angeordnet ist. In diesem Teilbereich der werkzeugseitige Kopplungseinrichtung 2 ist eine Aufsteckhülse 10 angeordnet, wobei dieses "werkzeugseitige Kupplungsmittel" in den Fig. 1 bis 4 über einem "magazinseitigen Kupplungsmittel" der magazinseitigen Kopplungseinrichtung 3, dem sog. Kupplungszapfen 20, angeordnet ist. Wie weiterhin aus den Fig. 3 und 4 ersichtlich, ist eine zentrale Achse der Aufsteckhülse 10 achsparallel zu einer zentralen Achse des Kupplungszapfens 20 angeordnet.

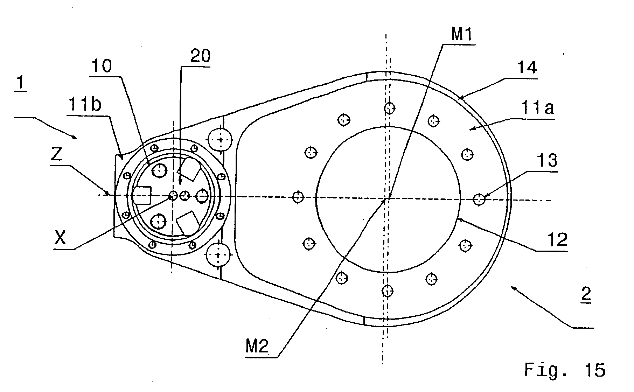

In dieser achsparallelen Anordnung gemäß der Achse X sind die Aufsteckhülse 10 und der Kupplungszapfen 20 miteinander koppelbar. In Fig. 15 sind die werkzeugseitigen und magazinseitigen Kopplungseinrichtungen 2,3 in einem derart gekoppelten Zustand gezeigt.

Werden mehrere magazinseitige Kopplungseinrichtungen 3 benachbart zueinander angeordnet, so können diese einen Ablegebahnhof (Magazin) mit einer Mehrzahl an _{"}Andockstellen" für die Ablage und Lagerung von Werkzeugen, insbesondere für verschiedene Werkzeuge eines Industrieroboters bilden.

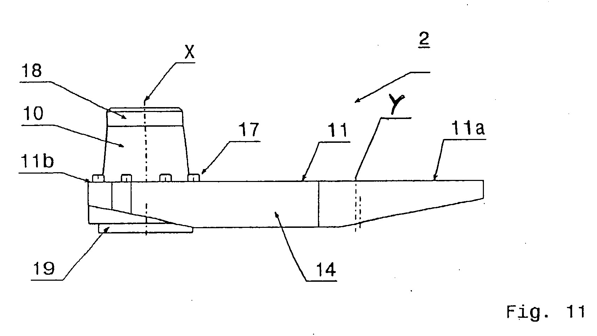

Die werkzeugseitige Kopplungseinrichtung 2, welche in den Fig. 11 bis 15 im einzelnen gezeigt ist, weist eine Grundplatte 11 auf. Die Grundplatte 11 ist bezüglich einer Mittellinie derselben (welche in Fig. 15 mit Z bezeichnet ist) symmetrisch aufgebaut, wobei eine Breite der Grundplatte 11 entlang der Mittellinie Z verändert ist. In dem in den Fig. 1 bis 4 und 11 bis 15 gezeigten Ausführungsbeispiel weist die entlang der Mittellinie Z verjüngt ausgeführte Grundplatte 11 einen Befestigungsbereich 11a zur Verbindung der werkzeugseitigen Kopplungseinrichtung 2 mit einem Werkzeug auf.

Entsprechend dem in diesen Figuren dargestellten Ausführungsbeispiel weist der Befestigungsbereich 11 a der Grundplatte 11 einen kreisförmigen Abschnitt mit dem Mittelpunkt M2 auf, wobei in diesem kreisförmigen Abschnitt eine Ausnehmung 12 und ein Lochkreis mit mehreren Bohrungen 13 ausgebildet sind. Im vorliegenden Ausführungsbeispiel ist die Ausnehmung 12 kreisförmig mit dem Mittelpunkt M1 ausgebildet (siehe Fig. 15). Zudem weist der Lochkreis im vorliegenden Ausführungsbeispiel zwölf Bohrungen 13 auf, die entlang der Umfangslinie der Ausnehmung 12 gleichmäßig verteilt angeordnet sind (siehe z.B. Fig. 15). Weiterhin sind die Mittelpunkte M1 und M2 jeweils auf der Mittellinie Z und benachbart zueinander angeordnet (siehe Fig. 15).

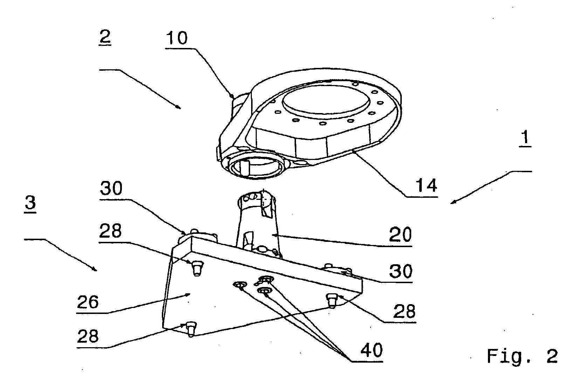

Bei Verbindung von werkzeugseitiger Kopplungseinrichtung 2 und Werkzeug durchsetzt zumindest ein Teil des Werkzeuges die Ausnehmung 12. Dabei wird vorliegend das Werkzeug teilweise in einem vertieften Bereich der werkzeugseitigen Kopplungseinrichtung 2 aufgenommen. Der vertiefte Bereich, der gemäß der Darstellung der Fig. 1 und 2 nach "unten offen" ist, wird durch eine Wandung 14 gebildet, welche im Randbereich der Grundplatte 11 im Aufnahmebereich 11a senkrecht auf der Grundplatte 11 angeordnet ist. Diese senkrechte Wandung 14 trägt auch wesentlich zur Verstärkung der Grundplatte quer zur Richtung der Grundplatte 11 bei. Dies ist insbesondere vorteilhaft, da in einer Richtung quer zur Grundplatte 11, d.h. in den Fig. 1 bis 4 von "oben nach unten", die am Werkzeug angreifende Gewichtskraft wirkt. Dementsprechend können zwischen Befestigungsbereich 11a und der Aufsteckhülse auftretende Biegemomente zusätzlich abgestützt werden. Dabei sind Form, Höhe und Dicke der Wandung 14 an den jeweiligen Anwendungsfall, d.h. auf die Befestigungsmöglichkeiten am Werkstück und die Kräfteverhältnisse (insbesondere Gewichtsverhältnisse) angepaßt.

Die entlang der Umfangslinie der Ausnehmung 12 angeordneten (zwölf) Bohrungen 13, welche den Lochkreis bilden, dienen zur Fixierung einer relativen Lage zwischen Werkstück und werkzeugseitiger Kopplungseinrichtung 2. In diesem Ausführungsbeispiel sind Stifte vorgesehen, die die Bohrungen 13 durchsetzen und in dem Werkzeug befestigt sind. Die Art des und Anzahl der Befestigungsmittels (wie Bolzen, Schrauben, Stifte), sowie auch das Befestigungsprinzips (form- oder kraftschlüssig, lösbar oder unlösbar) kann jedoch ohne die vorliegende Werkzeuglagerungseinrichtung wesentlich zu verändern an den konkreten Anwendungsfall, insbesondere das zu befestigende Werkzeug angepaßt werden.

Die vorliegende Werkzeuglagerungsvorrichtung ist zudem nicht auf die vorstehend beschriebene konkrete Ausgestaltung des Befestigungsbereiches 11a der Grundplatte 11 der werkzeugseitigen Kopplungseinrichtung 2 beschränkt. Vielmehr kann auch der Befestigungsbereich allgemein an die konkrete Ausgestaltung des Werkzeuges angepaßt werden. Die Lagerungsfunktion der vorliegenden Werkzeuglagerungsvorrichtung wird dadurch nicht wesentlich beeinflußt. Insbesondere kann der Befestigungsbereich 11a der Grundplatte 11 an eine Gewichtsverteilung des Werkzeuges angepaßt werden, wodurch auch eine "Ausbalancierung" eines in der Werkzeuglagerungsvorrichtung gelagerten (abgelegten) Werkzeuges ermöglicht ist.

Wie in den Fig. 1 bis 4 und 11 bis 15 gezeigt, geht der kreisförmige Abschnitt des Befestigungsbereiches 11 a der Grundplatte 11 der werkzeugseitigen Kopplungseinrichtung 2 in zwei geradlinige Abschnitte tangential über, wobei die geradlinigen Abschnitte einen Schnittpunkt außerhalb der Grundplatte 11 aufweisen. Diese geradlinigen Abschnitte leiten den Befestigungsbereich 11a in einen Kopplungsbereich 11b über. Der Kopplungsbereich 11b ist gegenüber dem Befestigungsbereich 11 a verjüngt ausgeführt. In diesem Kopplungsbereich 11b ist eine weitere Aussparung 16 und ein weiteres Lochkreismuster mit den Bohrungen 15 ausgebildet. Die Aufsteckhülse 10 durchsetzt die weitere Aussparung 16 und ist über Schrauben 17 mit den Bohrungen 15 des Lochkreismusters verbunden.

Somit ist der Kopplungsbereich 11b mit der Aufsteckhülse 10 an der Grundplatte 11 in einem dem Befestigungsbereich 11a gegenüberliegenden und verjüngt ausgeführten Bereich angeordnet. Dadurch wird eine einseitige Auflagerung der Aufsteckhülse 10 auf dem Kupplungszapfen 20, und damit letztlich eine einseitige Lagerung des Werkzeuges im Werkzeugbahnhof ermöglicht.

Die vorliegende Werkzeuglagerungsvorrichtung ist jedoch nicht auf diese konkrete Ausführungsform der Grundplatte 11 beschränkt ist, vielmehr ist die Ausgestaltung der Grundplatte 11 abhängig von einer Ausgestaltung des Werkzeuges, mit welchem die erste Kopplungseinrichtung zu verbinden ist und den konstruktiven Bedingungen des zu bildenden Werkzeugbahnhofs im konkreten Einzelfall.

Wie insbesondere auch aus den Fig. 1 bis 4, und 11 bis 15 ersichtlich, weist die Aufsteckhülse 10 eine Außenkontur mit einem sich verjüngenden Bereich auf, der in seinen Endbereichen jeweils in einen zylindrischen Bereich 18,19 übergeht. Eine Innenkontur der Aufsteckhülse 10 weist einen sich konisch verjüngenden Bereich auf, der in seinen Endbereichen jeweils in einen zylindrischen Bereich 18a,19a übergeht.

Die werkzeugseitige Aufsteckhülse 10 der werkzeugseitigen Kopplungseinrichtung 2 ist gemeinsam mit einem Kupplungszapfen 20 der magazinseitigen Kopplungseinrichtung 3 zum Verbinden der magazinseitigen und werkzeugseitigen Kopplungseinrichtungen 2,3 in einer vorbestimmten relativen Lage zueinander vorgesehen.

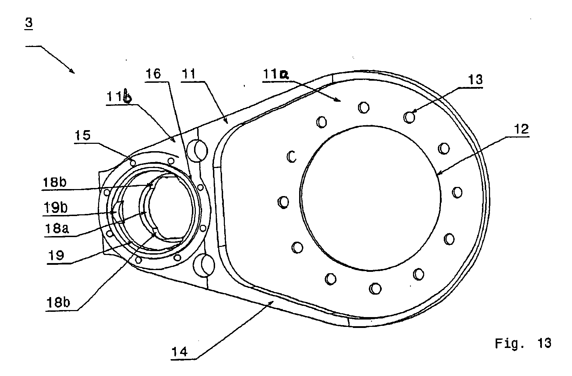

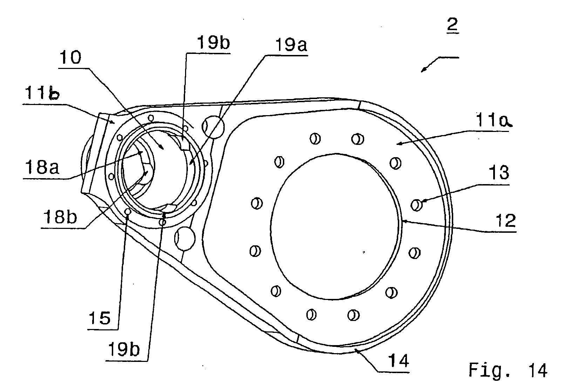

Um die Kopplung in dieser vorbestimmten relative Lage zu führen und sicherzustellen, weist die werkzeugseitige Aufsteckhülse 10 (wie insbesondere in den Fig. 13 und 14 dargestellt) mehrere achsparallele Führungsnuten 18b,19b auf, die mit Führungsmitteln 22,23 korrespondieren, welche am magazinseitigen Kupplungszapfen 20 angeordnet sind, und eine Kopplung von magazinseitiger und werkstückseitiger Kopplungseinrichtung in einer vorgegebenen relativen Lage gestatten.

Dabei sind an der Innenumfangsfläche der Aufsteckhülse 10 drei achsparallele Führungsnuten 18b gleichmäßig verteilt entlang der Innenumfangsfläche in einer ersten Ebene angeordnet, wobei die Führungsnuten 18b dabei im zylindrischen oberen Abschnitt 18a der Aufsteckhülse 10 vorgesehen sind. Zudem sind drei weitere ebenfalls achsparallele Führungsnuten 19b (siehe Fig.14) gleichmäßig verteilt entlang der Innenumfangsfläche und in einer zur ersten Ebene parallelen Ebene angeordnet, wobei die weiteren Führungsnuten 19b im zylindrischen unteren Abschnitt 19a der Aufsteckhülse 10 vorgesehen sind.

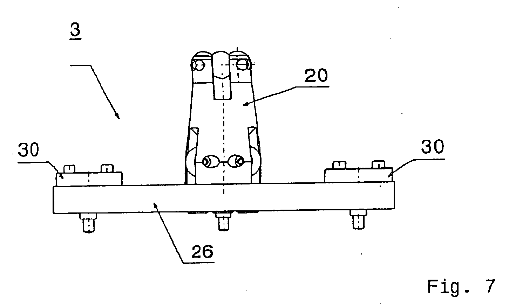

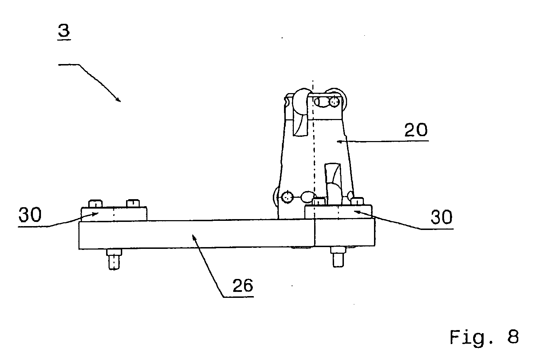

Entsprechend zu diesen Führungsnuten 18b,19b sind am Kupplungszapfen 20 in zwei parallelen Ebenen jeweils drei Führungsmittel 22,23 vorgesehen, um eine Führung der werkzeugseitigen Kopplungseinrichtung 2 relativ zu der magazinseitigen Kopplungseinrichtung 3 in einer vorbestimmten Lage zu ermöglichen (wie in den Fig. 1 bis 11 dargestellt). Genauer gesagt sind drei Führungsmittel 22 in einer Stirnseite des Kupplungszapfens 20 und drei weitere Führungsmittel 23 an einer Außenumfangsfläche des Kupplungszapfens 20 gleich verteilt entlang des jeweiligen Umfangs und jeweils in einer Ebene angeordnet.

Jeweils eines der in der Stirnseite des Kupplungszapfens 20 angeordneten Führungsmittel 22 ist zum Eingriff mit einer der im zylindrischen oberen Abschnitt 18a der Aufsteckhülse 10 angeordneten achsparallele Führungsnuten 18b vorgesehen. Zudem ist jeweils eines der an einer Außenumfangsfläche des Kupplungszapfens 20 angeordneten Führungsmittel 23 zum Eingriff mit einer der im zylindrischen unteren Abschnitt 19a der Aufsteckhülse 10 angeordneten achsparallele Führungsnuten 19b vorgesehen.

Dabei sind, wie insbesondere aus Fig. 1 und 5 bis 9 ersichtlich, die an der Stirnseite des rotationssymmetrischen Grundkörpers des Kupplungszapfens 20 angeordneten Führungsmittel 22 entlang des Umfangs versetzt zu den an der Außenumfangsfläche des rotationssymmetrischen Grundkörpers des Kupplungszapfens 20 angeordneten Führungsmittel 23 angeordnet. Die entsprechenden Führungsnuten 18b,19b weisen einen entsprechenden Versatz auf, wie insbesondere auch aus Fig. 13 und Fig. 14 ersichtlich.

Die Führungsmittel 22,23 sind im vorliegenden Ausführungsbeispiel kugelscheibenförmig ausgebildet, drehbar am Kupplungszapfen 20 gelagert und zumindest teilweise in im Kupplungszapfen 20 ausgebildeten Ausnehmungen 24,25 aufgenommen (siehe Fig. 3 und 4). Zur drehbaren Lagerung der Führungsmittel 22,23 sind im vorliegenden Ausführungsbeispiel Stifte in den rotationssymmetrischen Grundkörper des Kupplungszapfens 20 im Bereich der Ausnehmungen 24,25 angeordnet.

Der Kupplungszapfen 20 ist an einer Basisplatte 26 befestigt. Wie beispielsweise aus der Fig. 2 ersichtlich, ist im beschriebenen Ausführungsbeispiel der Kupplungszapfen 20 über drei dreieckförmig angeordnete Schraubverbindungen 40 mit der Basisplatte 26 verbunden.

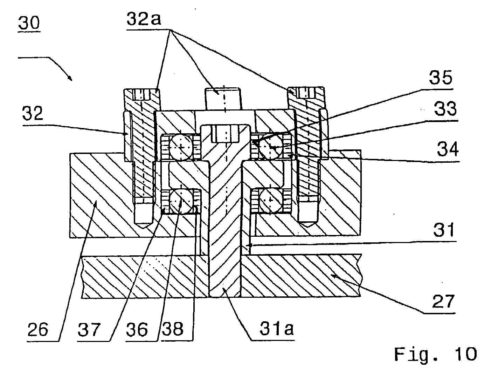

Die Basisplatte 26 der magazinseitigen Kupplungseinrichtung 3 ist, wie beispielsweise aus den Fig. 1 bis 11 ersichtlich, über drei Lagerungseinheiten 30 magazinseitig gelagert. Dazu sind die Lagerungseinheiten 30 mit einem in Fig. 10 schematisch angedeuteten magazinseitigen Träger 27 verbunden.

Die Lagerungseinheiten 30 sind an der Basisplatte 26 dreieckförmig angeordnet, wobei jede der Lagerungseinheiten 30 eine bestimmte Bewegung der Basisplatte 30 gegenüber dem magazinseitigen Träger 27 ermöglicht.

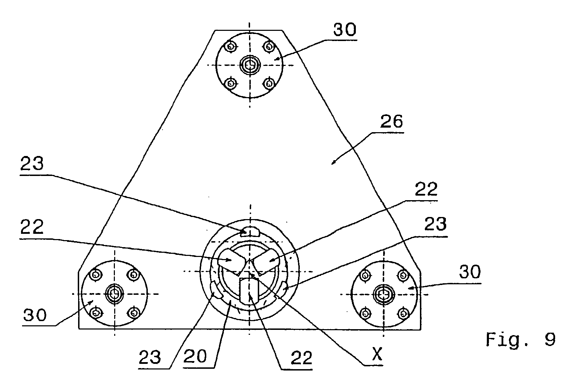

Die relative Lage der Lagerungseinheiten 30 zueinander und relativ zum Kupplungszapfen 20 ist insbesondere aus Fig. 9 entnehmbar. Wie in Fig. 9 gezeigt, sind die Lagerungseinheiten 30 dreieckförmig angeordnet, wobei der Kupplungszapfen 20 außermittig bezüglich des durch die Mittelpunkte der Lagerungseinheiten 30 gebildeten Dreiecks und benachbart zu einer Seite dieses durch die Lagerungseinheiten 30 aufgespannten Dreiecks angeordnet ist. Dabei ist der Kupplungszapfen 30 mittig bezüglich der benachbarten Seite des aufgespannten Dreiecks, im vorliegenden Anwendungsfall mittig bezüglich der Basisseite des gebildeten Dreiecks angeordnet.

In Fig. 10 ist ein Ausführungsbeispiel der Lagerungseinheit 30 in einer Schnittdarstellung gezeigt, die zur Lagerung der Basisplatte 26 der magazinseitigen Kopplungseinrichtung 3 verwandt wird.

Gemäß diesem Ausführungsbeispiel weist die Lagerungseinheit 30 eine rotationssymmetrische innere Hülse 31 und eine rotationssymmetrische äußere Hülse 32 auf. Die innere Hülse 31 ist über einen zentral angeordneten Haltebolzen 31a mit dem magazinseitigen Träger 27 verbunden, wobei der zentral angeordnete innere Haltebolzen 31a mit dem Träger 27 verschraubt ist. Die äußere Hülse 32 ist über mehrere äußere Haltebolzen 32a mit der Basisplatte 26 verschraubt. Die rotationssymmetrische (vorliegend kreisförmige) äußere Hülse 32 ist über vier gleichmäßig am Umfang verteilte äußere Haltebolzen 32a mit der Basisplatte 26 verschraubt.

Zwischen der äußeren Hülse 32 und der inneren Hülse 31 ist ein erstes Ausgleichsmittel angeordnet. Das erste Ausgleichsmittel weist ein ringförmiges Rückstellelement 34 auf, in dem mehrere Ausnehmungen 35 ausgebildet sind. In den (im vorliegenden Ausführungsbeispiel als Bohrungen ausgebildeten) Ausnehmungen 35 sind Wälzkörper 33 (im vorliegenden Ausführungsbeispiel: Kugeln) aufgenommen, wobei die Kugeln 33 die äuβere und inneren Hülsen 31,32 gegeneinander abstützen. Wie aus Fig. 10 entnehmbar sind die Ausnehmungen 35 durchgängig, wodurch die Kugeln in axialer Richtung (bezüglich der Hülsen 31,32) mit den Hülsen 31,32 Kontaktbereiche aufweisen. In radialer Richtung (bezüglich der Hülsen 31,32) ist zwischen den Kugeln 33 und den Hülsen jeweils Werkstoff des Rückstellelementes 34 angeordnet. Im vorliegenden Ausführungsbeispiel sind auf diese Weise acht Kugeln zwischen äußerer und innerer Hülse 31,32 aufgenommen (von denen zwei Kugeln in Fig. 10 gezeigt sind), wobei die Anzahl an Kugeln 33 von einer Belastung im konkreten Anwendungsfall (der abzustützenden Masse) abhängig ist. Das Rückstellelement 34 besteht aus einem elastisch verformbaren Werkstoff, wobei die elastischen Eigenschaften des Werkstoffes des Rückstellelementes 34 an eine im Einzelfall gewünschte Rückstellkraft angepaßt ist.

Weiterhin ist zwischen der inneren Hülse 31 und der Basisplatte 26 ein zweites Ausgleichsmittel angeordnet. Das zweite Ausgleichsmittel ist gleichartig zum ersten Ausgleichsmittel ausgebildet und weist ein ringförmiges Rückstellelement 37 auf, in dem mehrere Ausnehmungen 38 ausgebildet sind. In den (im vorliegenden Ausführungsbeispiel als Bohrungen ausgebildeten) Ausnehmungen 38 sind Wälzkörper 36 (im vorliegenden Ausführungsbeispiel: Kugeln) aufgenommen, wobei die Kugeln 36 die innere Hülsen 31 gegen die Basisplatte 26 abstützt. Wie aus Fig. 10 entnehmbar sind die Ausnehmungen 38 durchgängig, wodurch die Kugeln 36 in axialer Richtung (bezüglich der Hülsen 31,32) mit der inneren Hülse 31 und der Basisplatte 36 Kontaktbereiche aufweisen. In radialer Richtung (bezüglich der Hülsen 31,32) ist zwischen den Kugeln 33 und der inneren Hülse 31 bzw. einer Äusnehmung in der Basisplatte 26 jeweils Werkstoff des Rückstellelementes 37 angeordnet. Im vorliegenden Ausführungsbeispiel sind auf diese Weise acht Kugeln zwischen innerer Hülse 31 und Basisplatte 26 aufgenommen (von denen wiederum zwei Kugeln in Fig. 10 gezeigt sind), wobei die Anzahl an Kugeln 36 von einer Belastung im konkreten Anwendungsfall (der abzustützenden Masse) abhängig ist. Das Rückstellelement 37 besteht aus einem elastisch verformbaren Werkstoff (insbesondere Hartgummi), wobei die elastischen Eigenschaften des Werkstoffes des Rückstellelementes 37 an eine im Einzelfall gewünschte Rückstellkraft angepaßt sind.

Die Ausgestaltung der Rückstellelemente 34,37 kann mit der Ausgestaltung eines Wälzkörperkafigs eines Wälzlagers aus einem elastisch verformbaren Material verglichen werden.

Das vorliegende Ausführungsbeispiel ist jedoch nicht auf die beschriebene Ausgestaltung der Rückstellelemente 34,37, insbesondere deren Ausbildung als zusammenhängende ringförmige Elemente mit mehreren Bohrungen 35 jeweils zur Aufnahme einer Kugel 33 beschränkt. Vielmehr können die Wälzkörper, d.h. die Kugeln 33, auch jeweils zwischen einem äußeren, durchmessergrößeren Ringelement und einem inneren, durchmesserkleineren Ringelement aufgenommen sein, wobei inneres und äußeres Ringelement jeweils aus einem elastisch verformbaren Werkstoff wie insbesondere Hartgummi ausgebildet sind. In diesem Ausführungsbeispiel sind die (von den Kugeln betrachtet) auf der Innenseite bzw. der Außenseite angeordneten Ringelemente unabhängig voneinander ausgebildet. Dabei können die auf der Innenseite bzw. der Außenseite angeordneten Ringelemente insbesondere auch aus unterschiedlichen Werkstoffen ausgebildet sein.

In dieser Ausgestaltung der Rückstellelemente 34,37 können diese mit der Ausgestaltung von Laufringen eines Wälzlagers aus einem elastisch verformbaren Material verglichen werden.

Zudem ist die vorliegende Werkzeuglagerungsvorrichtung bzw. die vorliegende Lagerungseinheit nicht auf die Verwendung von Kugeln als Wälzkörper beschränkt, vielmehr ist eine Form und eine Anzahl an Wälzkörpern ausgehend vom konkreten Anwendungsfall frei wählbar. Ebenfalls sind verschiedene elastische Werkstoffe für die Rückstellelemente entsprechend den jeweils vorliegenden Kräfteverhältnissen und den gewünschten relativen Bewegungen zwischen Basisplatte 26 und Träger 27 frei wählbar.

Insbesondere aus der perspektivischen Darstellung der Fig. 2 ist ersichtlich, dass die Basisplatte 26 drei Ausnehmungen 28 aufweist, welche jeweils von einer der inneren Hülsen 31 und einem der Haltebolzen 31 a durchsetzt sind.

Das Lagerungsprinzip der vorstehend beschriebenen Lagerungseinheit ist mit einer "schwimmenden Lagerung" verwandt. Diese neuartige Form einer schwimmenden Lagerung eignet sich besonders zur Abstützung beträchtlicher Kräfte. Da die einzelnen Werkzeuge teils erhebliche Massen aufweisen (bis zu 500 kg), eignet sich dieses Lagerungsprinzip insbesondere für die vorliegende Werkzeuglagerungsvorrichtung, also zur einseitigen Abstützung von Werkzeugen. Die vorliegende Lagerungseinheit ist jedoch nicht auf den vorstehend beschriebenen Anwendungsfall einer Werkzeuglagerungsvorrichtung beschränkt, sondern ist in besonderer Weise dazu geeignet schwere Bauteile schwimmend abzustützen. Besonders vorteilhaft ist zudem, daß die Rückstellelemente wesentliche Rückstellkräfte erzeugen können, wodurch eine gewünschte Sollposition bevorzugt eingenommen wird. Folglich ist die vorliegende Lagerungseinheit von besonderem Vorteil, wenn hohe Massen schwimmend abzustützen sind.

Die Fig. 3 und 4 zeigen die werkzeugseitigen und magazinseitigen Kopplungseinrichtungen 2, 3 in Seitenansichten unmittelbar vor Koppelung zwischen Aufsteckhülse 10 und Kupplungszapfen 20 bzw. unmittelbar nach Trennung der Aufsteckhülse 10 von dem Kupplungszapfen 20. Wie dargestellt, ist zu diesem Zeitpunkt die Aufsteckhülse 10 achsparallel mit dem Kupplungszapfen 20 angeordnet.

Aus diesen Fig. 3 und 4 ist insbesondere auch der Versatz zwischen den stirnseitig angeordneten Führungsmitteln 22 und den außendurchmesserseitig angeordneten Führungsmittel 23 des Kupplungszapfens 20 ersichtlich. Ebenso ist die Form der Ausnehmungen 24,25, welche diese Führungsmittel 22,23 teilweise aufnehmen, erkennbar. Insbesondere ist ersichtlich, dass ein Bodenbereich der Ausnehmungen 24,25 entsprechend zu der kugelscheibenförmigen Ausbildung der Führungsmittel 22,23 ausgeformt ist.

Ebenso sind die Bohrungen zur Aufnahme der Zapfen, über welche die Führungsmittel 22,23 gelagert sind, ersichtlich.

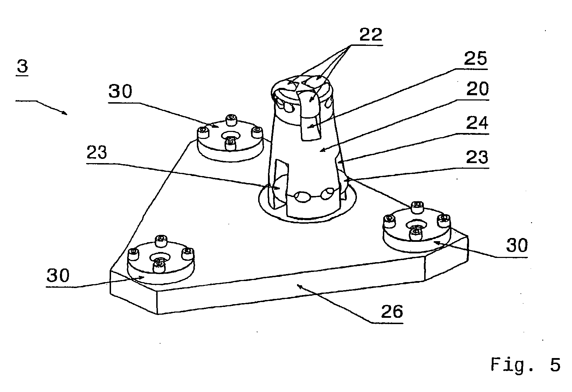

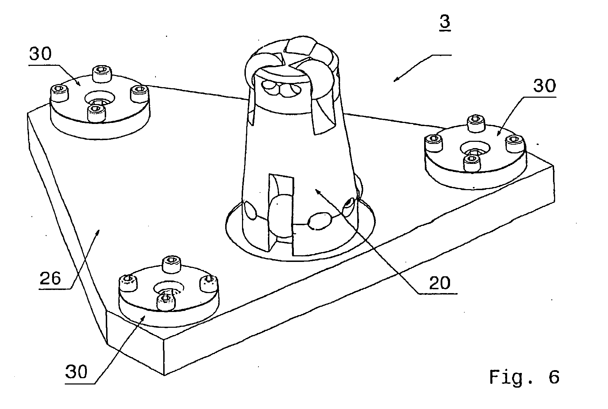

In den perspektivischen Darstellungen der Fig. 5 und 6, den Seitenansichten 7 und 8 und der Draufsicht 9 ist das vorliegende Ausführungsbeispiel der magazinseitigen Kopplungsvorrichtung 3 verdeutlichend gezeigt.

Insbesondere ist die relative Lage der Lagerungseinheiten 30 zueinander und relativ zum Kupplungszapfen 20 gezeigt. Ebenso ist die relative Anordnung der Führungsmittel 22,23 zueinander erkennbar.

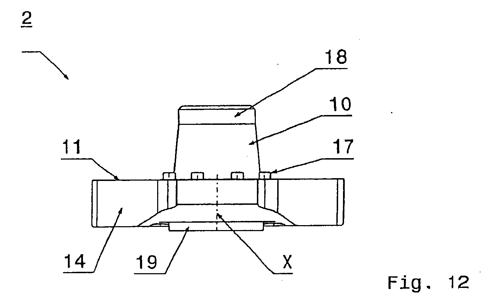

Die konkrete Ausgestaltung der werkzeugseitigen Kopplungseinrichtung 2 ist über die Seitenansichten der Fig. 11 und 12 sowie die perspektivischen Darstellungen der Fig. 13 und 14 klar ersichtlich.

In Fig. 15 sind die werkzeugseitige und die magazinseitige Kopplungseinrichtung ausgehend von der Seite der Basisplatte 26 dargestellt. Der Kupplungszapfen 20 ist achssymmetrisch mit der Aufsteckhülse 10 angeordnet. Die stirnseitig angeordneten Führungsmittel 22 sind versetzt zu den außendurchmesserseitig angeordneten Führungsmitteln 23 des Kupplungszapfens 20 angeordnet. Die Führungsmittel 22,23 sind in Führungsnuten 18b,19b der Aufsteckhülse 10 teilweise aufgenommen.

Der in Fig. 15 rechts angeordnete Bereich der Grundplatte 11 ist mit einer kreisförmigen Ausnehmung 12 und einem symmetrischen Lochkreismuster mit zwölf Bohrungen 13 ausgebildet. Der in Fig. 15 links angeordnete Bereich der Grundplatte 11 ist ebenfalls mit einer Ausnehmung 16 zur teilweisen Aufnahme der Aufsteckhülse 10 und einem Lochkreismuster mit acht Bohrungen 15 zur Befestigung der Aufsteckhülse 10 vorgesehen.

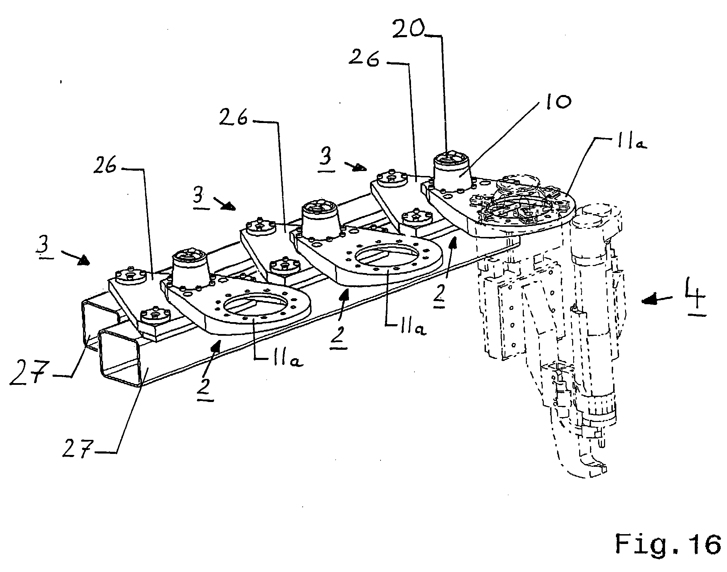

In Fig. 16 ist ein Werkzeugbahnhof mit drei Werkzeuglagerungsvorrichtungen 1 schematisch gezeigt. Die Werkzeuglagerungsvorrichtungen 1 weisen jeweils eine werkzeugseitige Kopplungseinrichtung 2 mit einer Aufsteckhülse 10 und eine magazinseitige Kopplungseinrichtung 3 mit einem Kupplungszapfen 20 auf, wobei die Aufsteckhülse 10 und dem Kupplungszapfen 20 gekoppelt ist, und wobei eine relative Lage (bezüglich der Achse des Kupplungszapfens bzw. der Aufsteckhülse) zwischen den Kopplungseinrichtungen 2,3 über die Führungsmittel zusammen mit den Führungsnuten festgelegt ist.

Die werkzeugseitigen Kopplungseinrichtungen 2 weisen eine Grundplatte 11 auf, die einen Befestigungsbereich 11a (Ausnehmung 12 mit Lochkreis) zur Verbindung der werkzeugseitigen Kopplungseinrichtungen 2 mit einem Werkzeug 4 eines Industrieroboters umfassen. Ein solches Werkzeug 4 ist in Fig. 16 an der im Hintergrund angeordneten Kopplungseinrichtung 2 angeordnet, wobei das Werkzeug aus Klarheitsgründen als strich-punktierte Linie dargestellt ist. Dabei durchsetzt ein Teilbereich des Werkzeuges 4 die Ausnehmung 12 der werkzeugseitigen Kopplungseinrichtung 2 und ist mittels der entlang der Umfangslinie der Ausnehmung 12 angeordneten (zwölf) Bohrungen 13, welche den Lochkreis bilden, fixiert.

Die magazinseitige Kopplungseinrichtungen 3 sind an dem magazinseitigen Träger 27 angeordnet, wobei eine Basisplatte 26 über drei Lagerungseinheiten 30 gelagert ist.

Daher ist, wie in Fig. 16 dargestellt, das Werkzeug über die werkzeugseitige und die magazinseitige Kopplungseinrichtungen 2,3 in einer vorgegebenen axialen Lage zueinander gekoppelt, wobei die werkzeugseitige Kopplungseinrichtung 2 an der magazinseitigen Kopplungseinrichtung 3 einseitig gelagert ist.

Nachfolgend wird die Funktionsweise der vorliegenden Werkzeuglagerungsvorrichtung anhand der Fig. 1 bis 4, welche einen Zustand der Werkzeuglagerungsvorrichtung unmittelbar vor einer Kopplung zwischen erster und zweiter Kopplungseinrichtung 2,3 bzw. unmittelbar nach Entkopplung der ersten und zweiten Kopplungseinrichtung 2,3 zeigen, und Fig. 15, welche einen gekoppelten Zustand zwischen erster und zweiter Kopplungseinrichtung 2,3 zeigen, erläutert.

Wie insbesondere aus Fig. 3 und 4 ersichtlich, wird die mit einem Werkzeug verbundene erste Kopplungseinrichtung 2 oberhalb der im Bereich eines Werkzeugmagazins angeordneten zweiten Kopplungseinrichtung 3 angeordnet. Die Aufsteckhülse 10 der ersten Kopplungseinrichtung 2 wird achsparallel zur Mittelachse des Kupplungszapfens 20 der zweiten Kopplungseinrichtung 3 angeordnet. Durch Absenken der ersten Kopplungseinrichtung 2 in Richtung der zweiten Kopplungseinrichtung 3 werden die Aufsteckhülse 10 und der Kupplungszapfen 20 aneinander angenähert. Die zweite Kopplungseinrichtung 3 wird derart angeordnet, dass die Grundplatte 11 der ersten Kopplungseinrichtung 2 parallel zur Basisplatte 26 der zweiten Kopplungseinrichtung 3 angeordnet ist und dass die Führungsnuten 18b,19b der Aufsteckhülse 10 korrespondierend zu den jeweiligen Führungsmitteln 22,23 des Kupplungszapfens 20 angeordnet sind.

Bei weiterer Annäherung der zweiten Kopplungseinrichtung 2 an die erste Kopplungseinrichtung 3 erfolgt eine teilweise Aufnahme der Führungsmittel 22,23 in die Führungsnuten 18b,19b und damit eine Positionierung der werkzeugseitigen ersten Kopplungseinrichtung relativ zu der magazinseitigen zweiten Kopplungseinrichtung 2. Dazu kann der Kupplungszapfen in einer zur Basisplatte parallelen Ebene eine Positionierbewegung (Ausgleichsbewegung) durchführen. Dies geschieht über die Ausgleichsmittel der Lagerungseinheiten 30 und innerhalb dieser Ausgleichsmittel über die Rückstellelemente und Wälzkörper. Dabei werden die Wälzkörper (Kugeln) der Ausgleichsmittel in die elastisch verformbaren Rückstellelemente hineingedrückt. Werkstoff der Rückstellelemente wird in die verbleibenden freien Bereiche verdrängt. Dementsprechend verlagert sich die Basisplatte 26 relativ zu einem magazinseitigen Träger 27. Die Position des Kupplungszapfens 20 wird an eine Position der Aufsteckhülse 10 angepasst.

Nach erfolgter vollständiger Annäherung zwischen der Aufsteckhülse 10 und dem Kupplungszapfen 20 wird die Verbindung vom Werkzeug zu dem bewegenden Roboter gelöst. Da folglich keine fixierenden Kräfte des Roboters auf das Werkzeug ausgeübt werden, erfolgt eine der beschriebenen Ausgleichsbewegung entgegengerichtete Rückstellbewegung, wodurch die magazinseitige Kopplungseinrichtung 3 und dementsprechend auch die werkzeugseitige Kopplungseinrichtung 2 und das mit dieser verbundene Werkzeug in die gewünschte Sollposition (aus einer von dieser differierenden Position) verschoben wird.

Der Roboter selbst kann nach Entkopplung vom Werkzeug zu einem weiteren Werkzeug bewegt werden, dieses aufnehmen und in einem zum vorstehend beschriebenen Prozess umgekehrten Vorgang aus diesem entnehmen. Auch bei dem Ankopplungsvorgang des Roboterarms an ein im Werkzeugbahnhof abgelegtes Werkzeug ist eine Differenz zwischen dem Kopplungsstück des Roboterarm und dem Kopplungsstück des Werkzeuges über die Lagerungseinheiten der magazinseitigen Kopplungseinrichtung ausgleichbar.

Somit kann die vorliegende Werkzeuglagerungsvorrichtung Positionierfehler eines Roboters beim Ablegen bzw. Aufnehmen eines Werkzeuges ausgleichen. Dadurch werden Beschädigungen der Werkzeuglagerungsvorrichtungen und einer damit gebildeten Werkzeugwechselvorrichtung bzw. einer Lagerungseinheit der Werkzeuglagerungsvorrichtung vermieden.

## Patentansprüche

1. Werkzeuglagerungsvorrichtung, insbesondere für Werkzeuge von Robotern oder Manipulatoren, mit einer an einem Werkzeug angeordneten ersten Kopplungseinrichtung (2) und einer im Bereich eines Werkzeugmagazins angeordneten zweiten Kopplungseinrichtung (3), wobei die werkzeugseitige und die magazinseitige Kopplungseinrichtungen (2,3) in einer vorgegebenen relativen Lage zueinander axial verbindbar sind, und wobei die werkzeugseitige Kopplungseinrichtung (2) an der magazinseitigen Kopplungseinrichtung (3) einseitig lagerbar ist.

2. Werkzeuglagerungsvorrichtung nach Anspruch 1, **dadurch gekennzeichnet, daß** die werkzeugseitige Kopplungseinrichtung (2) eine Grundplatte (11) aufweist, wobei an einem Ende der Grundplatte (11) eine Ausnehmung (12) zur Lagerung des Werkzeuges und einen Lochkranz zum Verbinden mit dem Werkzeug ausgebildet und die Grundplatte (11) an einem gegenüberliegenden Ende mit einer Aufsteckhülse (10) verbunden ist.

3. Werkzeuglagerungsvorrichtung nach Anspruch 1 oder 2, **gekennzeichnet durch** einen Kupplungszapfen (20) der magazinseitigen Kopplungseinrichtung (3), wobei der Kupplungszapfen (20) gemeinsam mit der Aufsteckhülse (10) der werkzeugseitigen Kopplungseinrichtung (3) zum Verbinden der magazinseitigen und werkzeugseitigen Kopplungseinrichtungen (2,3) vorgesehen ist.

4. Werkzeuglagerungsvorrichtung nach Anspruch 3, **gekennzeichnet durch** zumindest eine achsparallele Führungsnut (18b,19b) und zumindest ein Führungsmittel (22,23), wobei die Führungsnut (18b,19b) an einer Innenumfangsfläche der Aufsteckhülse (10) und das Führungsmittel (22,23) am Kupplungszapfen (20) angeordnet sind und das Führungsmittel (22,23) in der Führungsnut (18b,19b) zur Vorgabe der relativen Lage zwischen magazinseitiger und werkzeugseitiger Koppeleinrichtung (2,3) zumindest teilweise aufnehmbar ist.

5. Werkzeuglagerungsvorrichtung nach Anspruch 4, **dadurch gekennzeichnet, daß** an der Innenumfangsfläche der Aufsteckhülse (10) jeweils drei achsparallele Führungsnuten (18b,19b) gleichmäßig verteilt entlang der Innenumfangfläche in zwei parallelen Ebenen angeordnet sind, und/oder daß an einer Stirnseite des Kupplungszapfens (20) und/oder an einer Außenumfangsfläche des Kupplungszapfens (20) jeweils drei Führungsmittel (22,23) gleichverteilt in zwei zueinander parallelen Ebene angeordnet sind, wobei die an der Stirnseite des Kupplungszapfens (20) angeordneten Führungsmittel (22) insbesondere entlang des Umfangs versetzt zu den an der Außenumfangsfläche des Kupplungszapfens (20) angeordneten Führungsmitteln (23) gelagert sind.

6. Werkzeuglagerungsvorrichtung nach zumindest einem der Ansprüche 3 bis 5, **dadurch gekennzeichnet, daß** der Kupplungszapfen (20) der magazinseitigen Kopplungseinrichtung (3) einen rotationssymmetrischen Grundkörper aufweist, wobei mehrere Führungsmittel (22,23) am Kupplungszapfen (20) gelagert sind, die zur Führung der Aufsteckhülse (10) der werkzeugseitigen Kopplungseinrichtung (2) bei Kopplung mit der magazinseitigen Kopplungseinrichtung (3) vorgesehen sind und/oder daß die Führungsmittel (22,23) kugelscheibenförmig ausgebildet, drehbar am Kupplungszapfen (20) gelagert und zumindest teilweise in im Kupplungszapfen (20) ausgebildeten Ausnehmungen (24,25) angeordnet sind.

7. Werkzeuglagerungsvorrichtung nach zumindest einem der Ansprüche 1 bis 6, **dadurch gekennzeichnet, daß** die magazinseitige Kopplungseinrichtung (3) in zumindest drei Lagerungseinheiten (30) in einer magazinseitigen Aufnahme gelagert ist, wobei die magazinseitige Kopplungseinrichtung (3) in einer Ebene bewegbar ist, die parallel zu der durch die zumindest drei Lagerungseinheiten (30) aufgespannten Ebene angeordnet ist.

8. Werkzeuglagerungsvorrichtung nach Anspruch 7, **dadurch gekennzeichnet, daß** die Lagerungseinheiten (30) jeweils eine innere Hülse (31), eine äußere Hülse (32) und zumindest ein zwischen innerer und äußerer Hülse (31,32) angeordnetes Ausgleichsmittel aufweisen, wobei die innere Hülse (31) mit der magazinseitigen Aufnahme und die äußere Hülse (32) mit der Basisplatte (26) verbunden sind.

9. Werkzeuglagerungsvorrichtung nach Anspruch 8, **gekennzeichnet durch** ein erstes Ausgleichmittel, wobei das erste Ausgleichsmittel mehrere Wälzkörpem (33), insbesondere Kugeln, und zumindest ein elastisch verformbares und insbesondere ringförmiges Rückstellelement (34) aufweist, wobei die Wälzkörpem (33) in Ausnehmungen (35) des Rückstellelementes (34) angeordnet sind, und wobei das erste Ausgleichsmittel zwischen innerer und äußerer Hülse (31,32) angeordnet ist und/oder **durch** ein zweites Ausgleichmittel, wobei das zweite Ausgleichsmittel mehrere Wälzkörpem (36), insbesondere Kugeln, und zumindest ein elastisch verformbares und insbesondere ringförmiges Rückstellelement (37) aufweist, wobei die Wälzkörpern (36) in Ausnehmungen (38) des Rückstellelementes (37) angeordnet sind, und wobei das zweite Ausgleichsmittel zwischen innerer Hülse (31) und Basisplatte (26) angeordnet ist.

10. Werkzeugwechselvorrichtung, insbesondere für Werkzeuge von Robotern oder Manipulatoren, **gekennzeichnet durch** eine Magazineinrichtung mit zumindest zwei Werkzeuglagerungsvorrichtungen nach zumindest einem der Ansprüche 1 bis 9.

11. Lagerungseinheit zur beweglichen Lagerung eines ersten Bauteils (26) an einem zweiten Bauteil (27) mit einer innere Hülse (31), die mit dem zweiten Bauteil (27) verbunden ist, einer äußere Hülse (32), die mit dem ersten Bauteil (26) verbunden ist, und zumindest einem Ausgleichsmittel, wobei das Ausgleichmittel mehrere Walzkörper (33,36), insbesondere Kugeln, und zumindest ein elastisch verformbares und insbesondere ringförmiges Rückstellelement (34,37) aufweist, wobei die Wälzkörper (33,36) das erste Bauteil (26) gegen das zweite Bauteil (27) und das Rückstellelement die Wälzkörper (33,36) gegen die innere Hülse (31) und/oder die äußere Hülse (32) abstützen.

12. Lagerungseinheit nach Anspruch 11, **dadurch gekennzeichnet, daß** die inneren und äußeren Hülsen (31,32) mit dem ersten bzw. zweiten Bauteil (26,27) jeweils über zumindest einen Haltebolzen (31a,32a) verbunden sind, wobei die inneren Hülsen (31) jeweils insbesondere über einen, achsparallel zur Mittelachse der inneren Hülsen (31) angeordneten inneren Haltebolzen (31a) und/oder die äußeren Hülsen (32) jeweils über insbesondere vier symmetrisch angeordnete äußere Haltebolzen (32a) gehalten sind.

13. Lagerungseinheit nach Anspruch 11 oder 12, **gekennzeichnet durch** ein erstes und/oder ein zweites Ausgleichmittel, wobei das erste Ausgleichsmittel mehrere Wälzkörper (33), insbesondere Kugeln, und zumindest ein elastisch verformbares und insbesondere ringförmiges Rückstellelement (34) aufweist, wobei die Wälzkörper (33) in Ausnehmungen (35) des Rückstellelementes (34) angeordnet sind, und wobei das erste Ausgleichsmittel zwischen innerer und äußerer Hülse (31,32) angeordnet ist, und wobei das zweite Ausgleichsmittel mehrere Wälzkörper (36), insbesondere Kugeln, und zumindest ein elastisch verformbares und insbesondere ringförmiges Rückstellelement (37) aufweist, wobei die Wälzkörper (36) in Ausnehmungen (38) des Rückstellelementes (37) angeordnet sind, und wobei das zweite Ausgleichsmittel zwischen innerer Hülse (31) und erstem Bauteil (26) angeordnet ist.

14. Lagerungseinheit nach zumindest einem der Ansprüche 11 bis 13, **dadurch gekennzeichnet, daß** die Rückstellelemente (34,37) aus einem elastisch verformbaren Werkstoff, insbesondere Hartgummi, ausgebildet sind.
